Europäisches Patentamt

European Patent Office

Office européen des brevets

(19)

(11) Numéro de publication : **0 012 088**
**B1**

(12) **FASCICULE DE BREVET EUROPÉEN**

(45) Date de publication du fascicule du brevet :
07.04.82

(21) Numéro de dépôt : 79400944.9

(22) Date de dépôt : 03.12.79

(51) Int. Cl.³ : **A 22 B  5/00**, A 22 C  17/04,
A 22 B  5/08

(54) **Procédé et dispositif de traitement de pieds de bovidés.**

(30) Priorité : 04.12.78 FR 7834720
04.12.78 FR 7834721
30.05.79 FR 7913786

(43) Date de publication de la demande :
**11.06.80 (Bulletin 80/12)**

(45) Mention de la délivrance du brevet :
**07.04.82 Bulletin 82/14**

(84) Etats contractants désignés :
**BE DE GB IT NL SE**

(56) Documents cités :
**CH - A - 598 765**
**DE - B - 1 507 912**
**FR - A - 2 184 144**
**US - A - 2 870 478**
**US - A - 2 914 795**
**US - A - 3 277 516**
**US - A - 3 348 261**
**US - A - 3 409 936**
**US - A - 3 510 908**

(73) Titulaire : **Tournier, Claude**
**Lioujas**
**F-12000 Rodez (FR)**

(72) Inventeur : **Tournier, Claude**
**Lioujas**
**F-12000 Rodez (FR)**

(74) Mandataire : **Lemoine, Michel et al**
**1, rue de Stockholm**
**F-75008 Paris (FR)**

Imprimerie Jouve, 18, rue St-Denis, 75001 Paris, France

## Procédé et dispositif de traitement de pieds de bovidés

La présente invention a trait à un procédé de traitement de pieds de bovidés, à savoir de bovins et d'ovins, destiné à être mis en œuvre dans les abattoirs, ainsi qu'à un dispositif pour la mise en œuvre de ce procédé.

Par « pieds de bovidés », dans le sens de la présente invention, on entend la partie de la patte qui s'étent en dessous de l'articulation du genou ou du jarret et aboutit au sabot.

On sait que, dans les abattoirs, ces pieds sont traités, après sectionnement, pour en séparer divers éléments constitutifs destinés à la production de sous-produits, tels que des engrais, de la gélatine, etc.

Les procédés de traitement actuellement connus sont essentiellement manuels, même s'ils peuvent comporter, pour certaines opérations, des machines. Ces procédés consistent principalement à laver les pieds, puis à les échauder, les désaboter, les dépiler, puis les désosser.

Certaines opérations délicates, telles que le désossage, ou l'écorchage, sont réalisées généralement de façon manuelle, alors que d'autres opérations, telles que par exemple le désabotage, sont parfois effectuées à l'aide de machines spéciales.

Ces méthodes, qui ont cours dans les abattoirs, nécessitent un personnel nombreux, relativement qualifié, travaillant dans des conditions difficiles. Les cadences sont faibles et la productivité est réduite. Leur mise en œuvre entraîne une importante consommation d'eau, qui est rejetée fortement polluée.

La présente invention se propose de remédier à ces inconvénients et de fournir un procédé permettant de réduire substantiellement la main-d'œuvre utilisée, d'augmenter considérablement la production horaire et d'économiser une importante quantité d'eau.

Elle se propose également de fournir un dispositif pour la mise en œuvre de ce procédé qui permette d'atteindre un degré élevé d'automatisation pour un niveau d'investissement relativement réduit.

L'invention a pour objet un procédé de traitement de pieds de bovidés, notamment de bovins et d'ovins, dans lequel on lave les pieds, on les échaude, on les désabote et on les épile, caractérisé par le fait qu'après avoir désaboté les pieds et en avoir enlevé les ergots, on les désosse ou on les écorche, à la suite de quoi on échaude les charnures ou les peaux obtenues séparées des parties osseuses et on les dépile.

Dans un mode de mise en œuvre préféré du procédé selon l'invention, de préférence après avoir désaboté les pieds et cisaillé les ergots des pieds, on effectue des entailles, soit manuellement, soit à l'aide d'un dispositif coupant, tel qu'une scie, à l'une au moins et, de préférence, aux deux extrémités, à la suite de quoi on saisit, à proximité de l'extrémité correspondante, une partie pendante ou lambeau de la charnure pour la tirer en direction de l'autre extrémité, provoquant ainsi la séparation de la charnure avec les éléments osseux.

Conformément à une caractéristique particulièrement avantageuse de l'invention, les entailles effectuées avant le désossage sont réparties de la façon suivante : une entaille tangentiellement à l'os, depuis l'extrémité supérieure du pied, du côté antérieur, sur une longueur d'environ 10 cm pour un pied de bœuf, créant deux fentes parallèles ; une entaille dans la partie ostéochondrienne de l'autre extrémité, d'une longueur d'environ 5 cm séparant la partie cartilagineuse du côté postérieur de cette extrémité d'avec la partie osseuse sous-jacente ; et une entaille tangentielle à l'os déterminant deux fentes courant respectivement depuis les fonds des fentes de la première entaille vers l'entaille ostéo-chondrienne et déterminant un lambeau postéro-inférieur comprenant la partie cartilagineuse séparée de l'os et un lambeau antéro-supérieur.

On effectue le désossage en maintenant le pied par une extrémité osseuse, en tirant le lambeau proche de cette extrémité vers l'extrémité opposée, puis en maintenant l'autre extrémité osseuse et en tirant l'autre lambeau de la même manière.

Les charnures obtenues après le désossage sont alors introduites dans un bain d'échaudage et l'on peut ensuite avantageusement les dépiler, soit à l'intérieur du bain d'échaudage, soit après les avoir extraites du bain. Conformément à une caractéristique avantageuse de l'invention, on utilise une quantité d'eau d'échaudage de 2 l par kg de charnure.

On effectue le dépilage de préférence par grattage des charnures à l'aide de moyens racleurs convenablement disposés.

Grâce au procédé selon l'invention, la durée de dépilage d'une charnure peut être de l'ordre de 3 mn et la production horaire de charnures par personne employée peut être avantageusement de l'ordre de 100.

L'invention a également pour objet un dispositif pour la mise en œuvre de ce procédé, comprenant des postes de lavage, de désabotage, d'échaudage, de dépilage et de désossage ou écorchage, dispositif caractérisé par le fait que le poste de désossage est disposé avant le poste d'échaudage et, de préférence, après le poste de désabotage.

Conformément à l'invention, le poste de désossage peut être avantageusement précédé d'un ou plusieurs postes d'entaillage ou amorçage.

Conformément à une forme de réalisation préférée de l'invention, le poste d'entaillage, qui suit par exemple un poste de cisaillage des ergots, comprend des moyens d'entaillage tels que par exemple une scie circulaire, le pied étant présenté à ladite scie, de préférence sur un support convenable, par un opérateur de façon à réaliser une entaille légèrement inclinée dans l'extrémité ostéo-chondrienne pour séparer la partie cartilagineuse postéro-inférieure d'avec la partie osseuse sous-jacente.

Le poste de désossage peut avantageusement comprendre une machine à désosser comprenant un organe fixe de préhension solidaire d'un châssis de la machine, constitué par exemple par un jeu de mâchoires maintenant le pied à désosser par son extrémité, et un organe mobile d'extraction constitué également par au moins un jeu de mâchoires saisissant le lambeau correspondant du pied pour le dégager de l'os, l'une des mâchoires de l'organe mobile d'extraction se déplaçant de préférence dans un plan parallèle au plan de mouvement dudit organe mobile, alors que l'une des mâchoires de l'organe fixe de préhension se déplace dans un plan perpendiculaire audit plan.

Dans une forme de réalisation particulièrement préférée de l'invention, le poste de dépilage comporte, dans une cuve recevant les charnures, des moyens racleurs constitués par une ou plusieurs surfaces munies d'une pluralité d'orifices dont le contour présente une arête vive dirigée vers lesdites charnures, certaines au moins desdites surfaces étant entraînées dans un mouvement relatif par rapport auxdites charnures.

De façon particulièrement avantageuse, ce poste peut comporter une cuve ouverte vers le haut et un plateau perforé horizontal disposé dans sa partie inférieure et entraîné en rotation, ledit plateau portant lesdits orifices avec leurs arêtes, les charnures étant contenues à l'intérieur de la cuve dans un cylindre perforé fixe dont le fond est formé par ledit plateau.

Le cas échéant, on peut mettre en œuvre l'échaudage dans ladite cuve en munissant celle-ci de moyens d'amenée d'eau chaude.

Le transfert entre les différents postes peut être effectué manuellement ou à l'aide de convoyeurs d'un type convenable.

La description suivante, concerne quelques dispositifs pour la mise en œuvre du procédé selon l'invention, faite à titre d'exemple non limitatif et se référant au dessin annexé dans lequel :

La figure 1 représente une vue schématique en élévation d'un dispositif suivant l'invention ;

La figure 2 représente une vue schématique de dessus de ce dispositif ;

La figure 3 représente une vue en élévation d'une variante de la partie terminale d'un dispositif selon l'invention ;

La figure 4 représente une vue schématique en élévation d'une machine à désaboter ;

La figure 5 représente une vue en coupe de cette machine ;

La figure 6 représente une vue schématique d'une machine à cisailler les ergots ;

La figure 7 représente une vue de dessus de cette machine, la table de protection étant enlevée ;

La figure 8 représente une vue schématique d'une machine de sciage selon l'invention ;

La figure 9 représente une vue en perspective d'un poste de désossage selon l'invention ;

Les figures 10 et 11 représentent des vues des mâchoires du poste de désossage et de leurs moyens d'actionnement ;

La figure 12 représente une vue schématique en perspective d'un poste combiné de désabotage, de cisaillage d'ergots et de sciage selon l'invention ;

La figure 13 représente une vue d'un détail de la figure 12 ;

La figure 14 représente une vue en perspective d'un poste de dépilage selon l'invention ;

La figure 15 représente une vue en section diamétrale de ce poste ;

La figure 16, composée des schémas A à F, représente schématiquement les différents stades du traitement d'un pied de bœuf ;

La figure 17 représente une vue en perspective d'un poste d'amorçage de désossage.

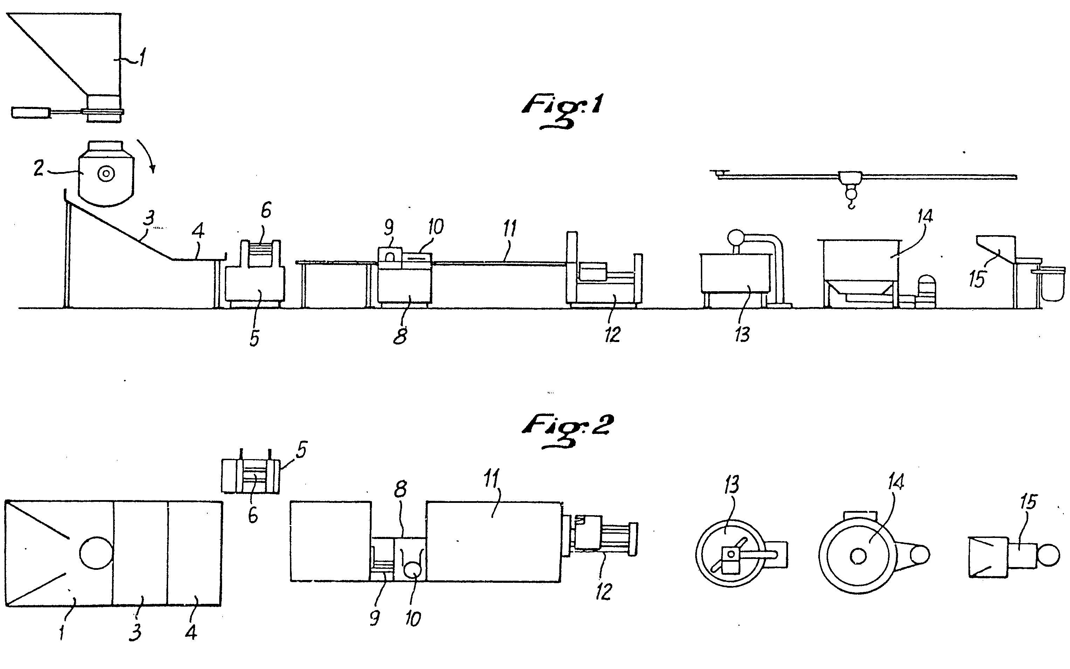

On se réfère tout d'abord aux figures 1 et 2.

Le dispositif représenté comporte un poste préparatoire alimenté par une trémie 1 dans laquelle un certain nombre de pieds de bovidés sont déversés et qui alimente une cuve de lavage 2 susceptible de tourner dans le sens de la flèche autour d'un axe horizontal. Des moyens d'amenée et d'évacuation d'eau (non représentés) sont prévus, de même que des moyens pour agiter les pieds dans la cuve. Lorsque les pieds sont propres, la cuve 2 est basculée autour de son axe et déverse les pieds sur un plan incliné 3 qui les fait glisser vers une aire d'attente 4. De là, un opérateur prend les pieds un à un et les présente à une désaboteuse 5, munie de secteurs de cylindres 6 tournant autour d'axes horizontaux. Après désabotage, les pieds sont de façon préférée directement acheminés à un poste de cisaillage-entaillage 8 comprenant une machine de cisaillage 9 et une machine de sciage 10. De là, l'opérateur préposé à ce poste 8 pose les pieds sur une table d'attente 11 où s'effectuent manuellement les autres opérations d'entaillage. De la table 11, les pieds sont amenés au poste de désossage 12. A cet endroit, les os sont évacués tandis que les charnures, qui comprennent les chairs et la peau, sont adressées à un poste d'échaudage 13, puis à un poste de dépilage 14 et enfin à un poste d'emballage 15 pour être emballés en vue de la congélation.

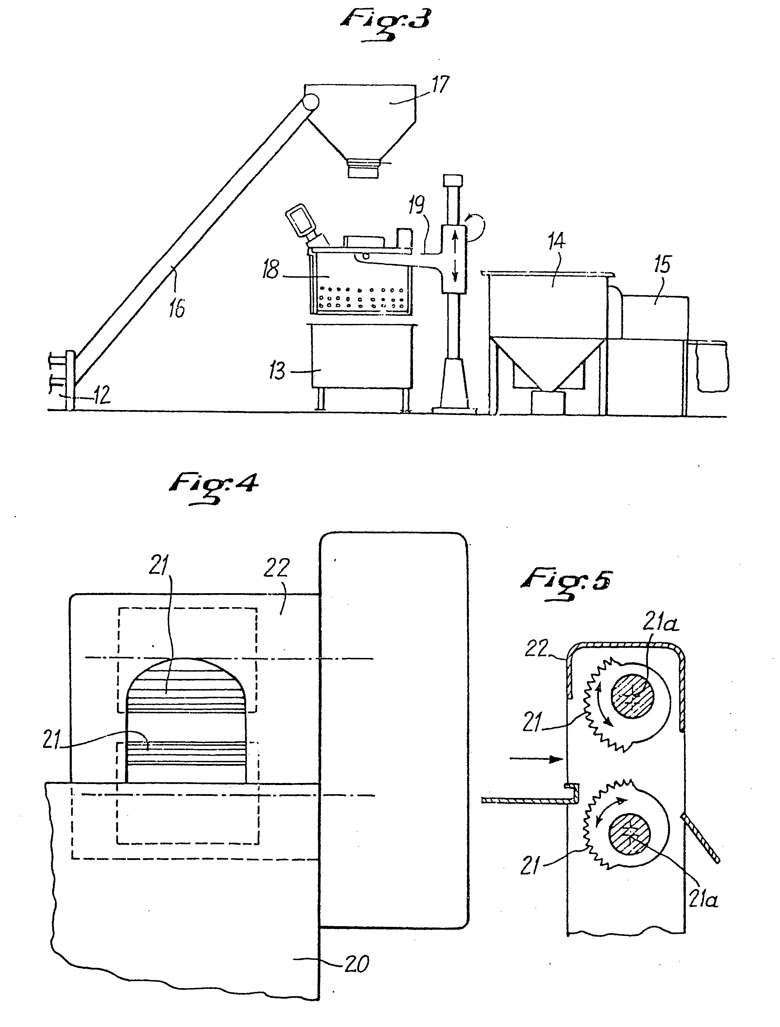

Un certain nombre des opérations de manutention qui s'effectuent manuellement dans un tel dispositif peuvent être automatiques et on montre, sur la figure 3, que depuis le poste de désossage 12 les charnures sont reprises par un convoyeur ascendant 16 vers une trémie 17 susceptible d'alimenter un bac d'agitation et transfert 18 porté par un bras rotatif et coulissant verticalement 19 susceptible de plonger le bac 18 dans la cuve du poste d'échaudage 13, de ressortir ce bac, de le faire tourner et d'amener le bac dans la cuve de la machine à dépiler 14. De même, des convoyeurs peuvent être prévus entre les différents autres postes, par exemple entre la table d'attente 4 et la désaboteuse 5.

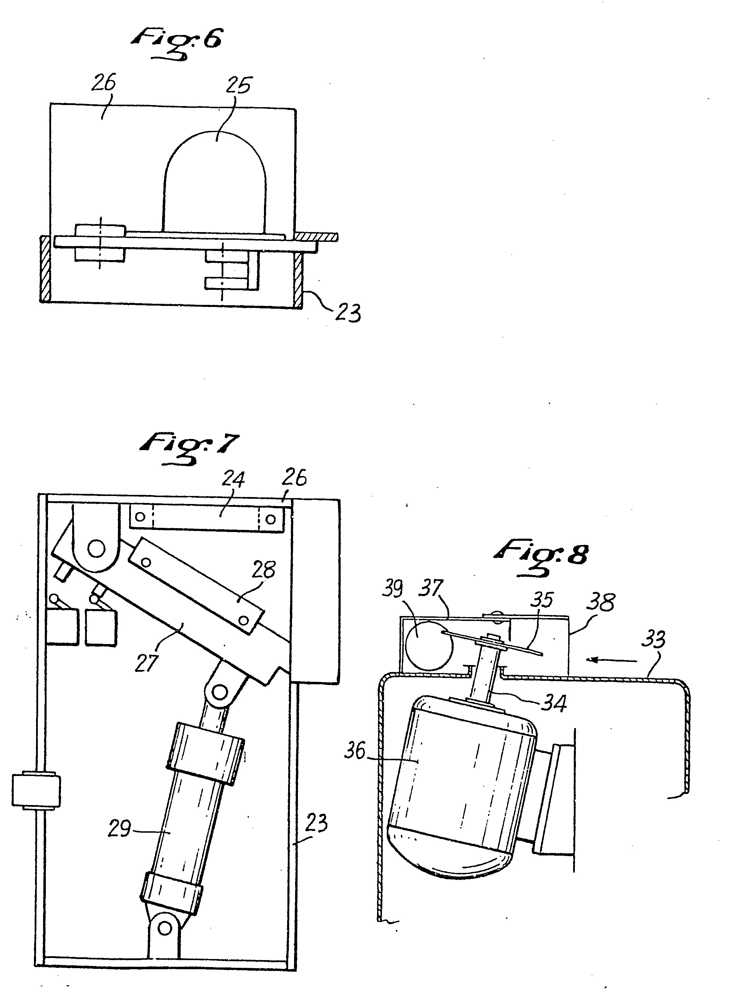

On se réfère maintenant aux figures 4 et 5.

La machine à désaboter 5 comprend un bâti 20 à l'intérieur duquel sont disposés des moyens moteurs et des moyens de commande convenables. A la partie supérieure du bâti sont montés deux secteurs de cylindres cannelés 21 tournant autour d'axes horizontaux excentriques 21a, et partiellement masqués par des capotages 22 qui ne laissent paraître que leurs parties voisines. La position de départ des secteurs 21 est celle du dessin, dans laquelle l'intervalle qui les sépare est le plus réduit. Les secteurs tournent en sens contraires, entraînant le sabot et augmentant l'intervalle. Après avoir tourné d'environ 150°, ils s'arrêtent puis tournent en sens opposés. L'opérateur tient le pied par son extrémité supérieure et introduit l'extrémité du sabot entre les deux secteurs qui commencent la rotation aller, puis dégage le pied pendant la rotation retour. Une telle machine permet par exemple de désaboter environ 15 pieds/minute.

L'expérience a montré qu'avec une telle machine, il est possible de désaboter le pied bien que celui-ci n'ait pas été préalablement échaudé comme on le faisait dans l'art antérieur.

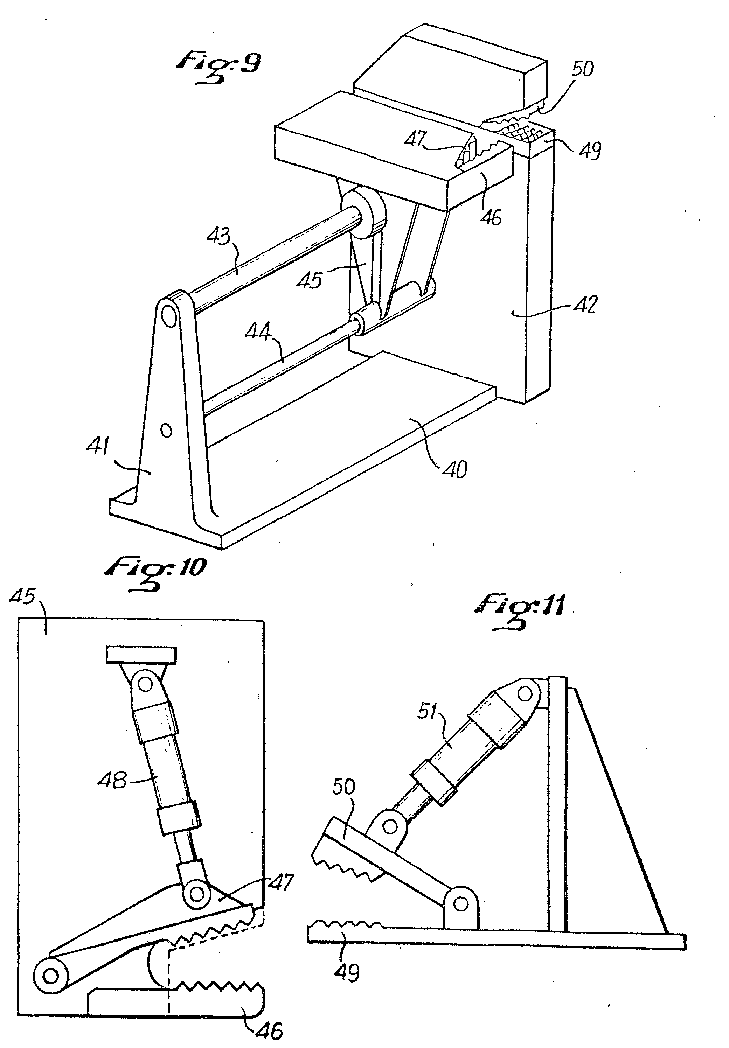

On se réfère aux figures 6 et 7.

Le dispositif de cisaillage d'ergots représenté comporte, à l'intérieur d'un bâti 23, un premier élément de cisaille tranchant 24 disposé horizontalement derrière une fenêtre 25 de protection, située dans une plaque verticale 26. Autour d'un axe vertical se trouve articulé un bras mobile horizontalement 27, portant le deuxième couteau 28 de la cisaille, ce bras 27 étant rendu mobile par un vérin convenablement articulé 29. De préférence, une table de protection convenable est disposée au-dessus de l'ensemble formé par le vérin 29 et le bras 27, cette table laissant cependant un passage entre les deux couteaux 24, 28. En fonctionnement, l'opérateur introduit par la fenêtre 25 un pied avec les deux ergots disposés vers le bas de façon à se trouver situés entre les couteaux 24 et 28. L'actionnement du bras mobile 27 provoque alors le sectionnement des ergots qui tombent et qui sont évacués.

L'opérateur retourne alors le pied pour présenter l'autre ergot et l'opération se reproduit.

Au lieu de bras pivotants, le couteau mobile pourrait également être porté par un support coulissant.

On se réfère à la figure 8.

Le poste de sciage représenté comporte un plateau horizontal 33 hors duquel émerge l'axe 34 d'une scie circulaire 35 entraînée par un moteur électrique 36. Un capotage 37, ouvert en 38, assure la protection de l'opérateur tout en permettant l'introduction d'un pied dans le sens de la flèche, le pied coulissant sur le plateau 33. Un orifice d'évacuation 39 est prévu dans le capotage.

On voit que l'axe 34 est incliné par rapport à la verticale d'un angle assez faible compris entre 8 et 14° et de préférence de l'ordre de 11°. Il en résulte que le plan de la scie 35 n'est pas horizontal mais incliné du même angle par rapport à l'horizontale. Le point le plus bas de la scie se trouve à environ 20 mm au-dessus de la table 33. Cette distance peut être modifiée lorsque l'on traite des pieds de veau ou d'ovins à la place de pieds de bœuf.

En variante l'axe de la scie, au lieu d'émerger d'une table horizontale, peut émerger d'une table verticale. Dans ce cas, le plan de la figure 8 ne serait pas un plan vertical, mais un plan horizontal, l'axe 34 étant contenu dans ce plan et la scie restant toujours faiblement inclinée par rapport à un plan de table devenu vertical.

On se réfère à la figure 9.

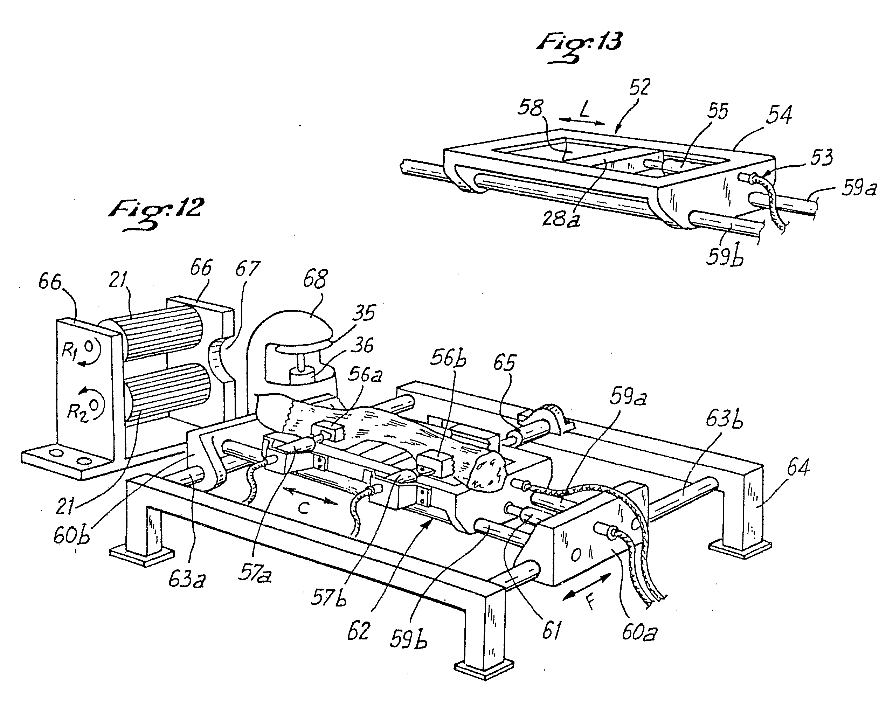

La machine à désosser qui est représentée sur cette figure comporte un bâti horizontal 40 avec deux montants verticaux extrêmes 41, 42. Entre ces montants s'étendent deux colonnes horizontales de guidage 43 et 44. Sur ces deux colonnes, se trouve guidé un chariot coulissant 45. Un vérin (non représenté) permet d'écarter le chariot 45 du montant 42 puis de le ramener. Le chariot 45 présente, sur l'une de ses faces latérales, deux mâchoires, à savoir une mâchoire fixe 46 et une mâchoire mobile 47 mieux vues sur la figure 10. La mâchoire mobile 47 peut se rapprocher de la mâchoire fixe 46 en pivotant dans un plan horizontal sous l'influence d'un vérin convenable 48. Les mâchoires 46 et 47 sont convenablement crantées.

A la même hauteur, le montant vertical 42 porte une mâchoire fixe 49 et une mâchoire mobile 50, mieux vues sur la figure 11, la mâchoire 50 étant susceptible de se rapprocher de la mâchoire 49 en pivotant dans un plan vertical sous l'influence d'un vérin 51. On voit sur la figure 9 que les mécanismes d'actionnement des mâchoires sont convenablement cachés dans des enveloppes de protection. En fonctionnement, l'opérateur place une extrémité osseuse d'un pied entre les mâchoires 49 et 50, le pied se dirigeant, depuis cette mâchoire, dans un sens sensiblement horizontal lorsqu'il y est immobilisé. Les mâchoires 46 et 47 se rapprochent pour saisir un embout pendant de l'autre extrémité du pied et le chariot 45 s'écarte alors du montant 42, entraînant avec lui la partie de charnure jusqu'à la séparer complètement de l'os qui reste maintenu.

Dans l'exemple représenté, l'intervalle entre les mâchoires 46 et 47 s'étend dans une direction sensiblement parallèle aux colonnes 43, 44. En variante, cet intervalle pourrait être sensiblement perpendiculaire à ces colonnes.

De même, en variante, au lieu d'utiliser un mouvement de coulissement du chariot 45, pour l'écarter du montant 42 et des mâchoires 49, 50, on pourrait utiliser un mouvement pivotant.

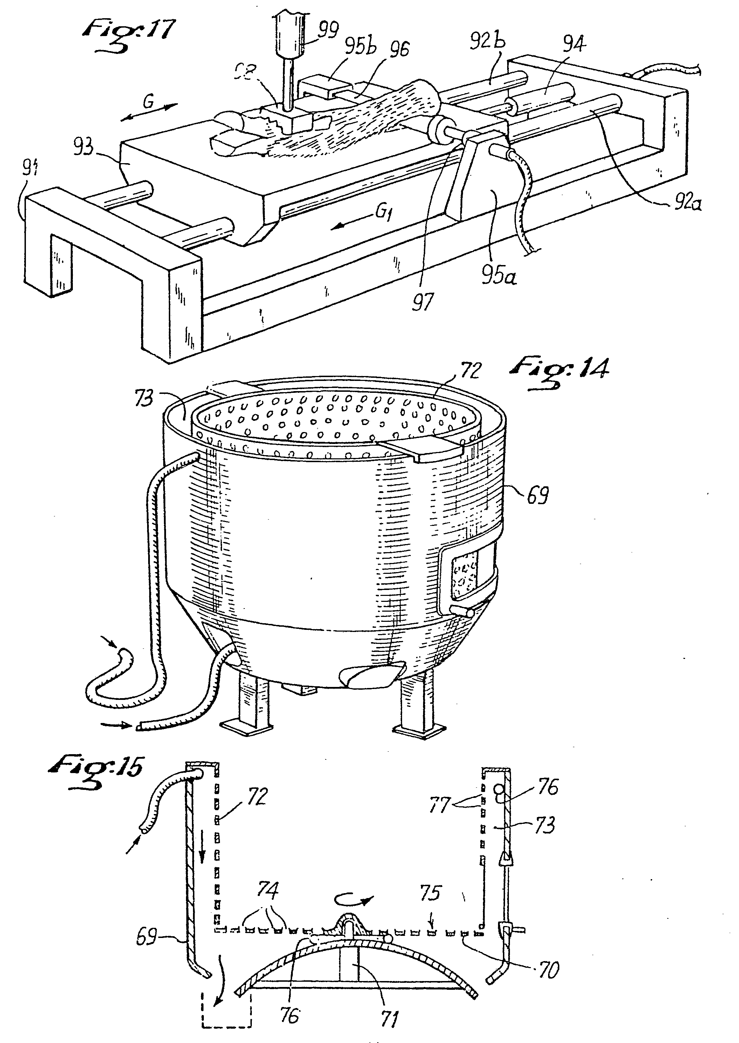

On se réfère aux figures 12 et 13.

Dans cette forme de réalisation, un même dispositif porte le poste de désabotage avec ses secteurs 21 convenablement protégés, le poste de sciage avec sa scie 35 inclinée et le poste de cisaillage d'ergots.

Le poste de cisaillage 52 est constitué d'un châssis 53 formé à sa partie supérieure d'un cadre rectangulaire 54 représenté plus clairement sur la figure 13. Dans celui-ci est agencée une lame mobile 28a (flèche L) coulissant sur les deux côtés longitudinaux dudit cadre et commandée par un vérin 55 dont le corps est fixé sur un côté latéral et la tête prend appui sur ladite lame.

Sur le châssis est également installé un organe de préhension se composant de deux jeux de mâchoires 56a et 56b commandés simultanément et respectivement par deux vérins 57a et 57b.

Comme on peut le voir à la figure 12, la patte à traiter est maintenue sur le cadre 54 par les jeux de mâchoires 56a et 56b, en ayant pris soin d'engager les deux ergots latéraux dans une fenêtre 58 définie par l'autre côté latéral dudit cadre et la lame 28a au repos. Il suffit, en temps voulu, d'actionner le vérin 55 pour que les ergots soient sectionnés par la lame et tombent dans un bac destiné à les recueillir.

Le cadre ou châssis 54 est monté coulissant (flèche C) sur deux rails de guidage 59a et 59b solidaires de deux flasques 60a et 60b. Les déplacements C de ce cadre 54 sont assujettis aux développements d'un vérin horizontal 61.

Le vérin 61 pourrait également commander les déplacements L de la lame mobile 28a. Pour ce faire, le côté latéral du cadre 54 serait traversé de part en part, par la tige du vérin 61 qui prendrait directement appui sur la lame. Ainsi, en actionnant le vérin 61, la lame se déplacerait, sectionnant les deux ergots latéraux puis prenant appui sur l'autre côté latéral du cadre, entraînant sur sa trajectoire ce dernier.

L'ensemble rails 59-flasques 60 définit un chariot 62 qui, lui aussi est monté coulissant sur deux rails de guidage 63a, 63b, perpendiculaires aux rails 9a, 9b et solidaires du bâti 64. Les déplacements (flèche F) de ce chariot sont senbiles aux développements de la tige d'un vérin 65 dont le corps est fixé sur le bâti 64.

Le poste de désabotage, quant à lui, est constitué de deux cylindres ou secteurs cannelés 21. Ces cylindres, en rotation sur des axes parallèles superposés et portés par deux paliers-support 66, sont entraînés en rotation inverse R1 et R2 au moyen, par exemple, d'un moteur hydraulique non représenté, pour arracher l'onglon ou sabot de la patte venant s'engager dans l'espace délimité entre eux. On notera que l'un des paliers-support 66 est muni d'une partie échancrée 67 autorisant le passage de la patte dont l'onglon vient d'être arraché par les cylindres, vers le poste d'entaillage. Ce dernier est constitué d'une scie circulaire 35 entraînée par un moteur 36 et protégée par un caisson 68. Le plan de la scie 35 est incliné par rapport à l'horizontale afin d'obtenir l'entamage désiré entre l'os et le cartilage, sur l'extrémité de la patte.

Le fonctionnement de la machine 1 est automatisé en connectant les alimentations des vérins à une centrale hydraulique programmée.

On place la patte à traiter sur le châssis 54 du poste de cisaillage en disposant le sabot en regard du poste de désabotage et en engageant les deux ergots latéraux dans la fenêtre 58, puis on met en service la centrale hydraulique programmée.

Dans un premier temps, les vérins 57a et 57b sont alimentés simultanément, actionnant les jeux de mâchoires 56a et 56b pour emprisonner entre elles la patte à traiter.

Dans un deuxième temps, le vérin 61 est alimenté, déplaçant le châssis vers les deux cylindres cannelés.

Dans un troisième temps, le vérin 65 est alimenté, déplaçant le chariot vers la scie 35 du poste d'entaillage qui opère sur l'extrémité de la patte désabotée l'incision désirée.

Dans un quatrième temps, le vérin 61 n'est plus alimenté, ramenant le châssis 54 vers le rail 63b.

Dans un cinquième temps, simultanément le vérin 61 n'est plus alimenté et le vérin 55 est alimenté : le premier ramène le chariot à sa position de départ pendant que le second actionne la lame mobile 28a qui sectionne les deux ergots latéraux.

Dans un sixième et dernier temps, les vérins 55, 57a et 57b ne sont plus alimentés, libérant la fenêtre 58 et la patte pour que la machine soit de nouveau prête à fonctionner pour le traitement d'une nouvelle patte.

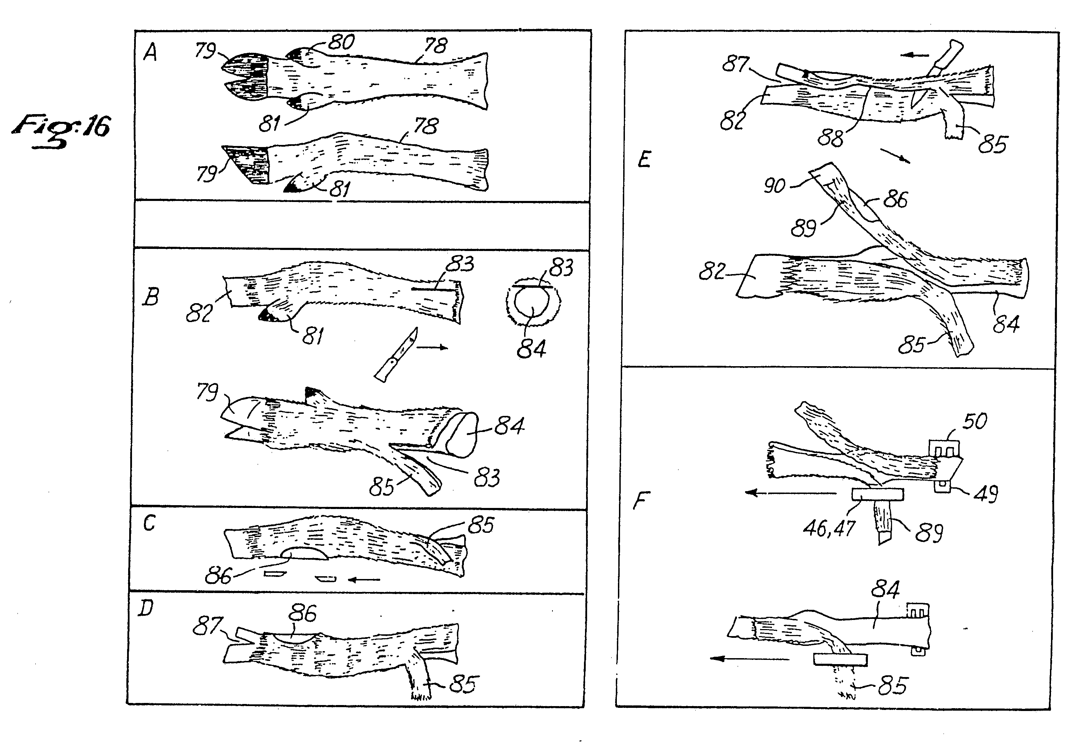

On se réfère aux figures 14 et 15.

La machine disposée au poste de dépilage comporte une cuve 69 dont la partie supérieure est cylindrique et ouverte vers le haut et la partie inférieure est conique. Au niveau du fond de la partie cylindrique est disposé, dans la cuve, un plateau horizontal perforé circulaire 70, rotatif sur un pibot central 71 grâce à des moyens d'entraînement connus. Ce plateau est surmonté périphériquement d'un cylindre 72, également perforé, fixe, solidairre de la cuve, avec laquelle il détermine un espace annulaire 73.

Les perforations 74 du plateau rotatif sont de préférence de forme circulaire, avec un diamètre compris entre 20 mm et 35 mm et, de préférence, de l'ordre de 28 mm. Les perforations sont entourées d'une arête vive 75 orientée vers la partie supérieure du plateau, déterminant à l'embouchure de la perforation un tranchant circulaire. La hauteur de chaque arête par rapport à la face supérieure du plateau est de l'ordre de 2 mm.

En fonctionnement, on introduit une pluralité de charnures échaudées à l'intérieur du cylindre 72 sur le plateau 70, puis on referme la cuve au moyen d'un couvercle convenable, non représenté. On alimente des rampes 76 de pulvérisation d'eau et l'on provoque la mise en rotation du plateau 70. Les poils arrachés par les arêtes 75 des orifices sont projetés par la force centrifuge du plateau, soit à travers lesdits orifices 74, soit par les ouvertures 77 du cylindre dans l'espace annulaire, puis sont entraînés, dans le sens de la flèche, vers des bacs de récupération. En fin d'opération, on retire les charnures dépilées.

De préférence, une telle machine comporte un plateau ayant un diamètre compris entre 1 m et 1,3 m et la vitesse de rotation est comprise entre 300 et 450 tours/mn.

Il est remarquable de constater que, de cette façon simple, on obtient un dépilage complet des charnures sans risque de lacérage ou de désorganisation, malgré l'absence d'élément rigide tel que l'os à l'intérieur des charnures.

On se réfère aux différents schémas de la figure 16 au vu de laquelle le détail des différentes opérations, susceptibles d'être effectuées sur les pieds d'animaux par le procédé suivant l'intention, va maintenant être exposé.

Un pied d'animal est représenté sur le schéma A en vue de dessus et en vue latérale de gauche. La patte comporte le pied 78 proprement dit, le sabot 79 et deux ergots latéraux 80, 81.

Le schéma B représente une vue latérale gauche du pied désaboté et l'on voit l'extrémité osseuse 82 du côté sabot. Le pied reçoit, du côté opposé au sabot, une incision 83 tangente à l'os canon 84 mais ne le touchant pas, cette incision 83 s'effectuant à la partie supérieure du pied pour créer deux fentes latérales permettant d'obtenir un lambeau 85 d'une longueur de l'ordre de 100 mm comme on le voit sur le pied représenté en perspective sur le schéma B.

Cette première amorce peut être effectuée manuellement, mais on conçoit qu'il serait également possible de l'effectuer au moyen d'un organe tranchant mécanique.

Le schéma C représente le pied après le cisaillage des ergots 79, 80, laissant subsister des plaies 86.

Le schéma D représente la manière dont s'effectue l'entaillage de la partie antérieure du pied, cet entaillage 87 s'effectuant, comme il a été vu, avec un certain angle incliné de la scie sur une longueur d'environ 50 mm à la partie postérieure du pied, c'est-à-dire du côté des ergots.

Le dessin supérieur du schéma E montre la réalisation de la deuxième amorce de désossage. Cette deuxième amorce s'effectue manuellement avec un couteau et l'on voit le couteau dans la position initiale, après qu'il a été enfoncé tangentiellement à l'os 84 et transversalement à la plus grande longueur de celui-ci, du côté postérieur du pied, c'est-à-dire du côté opposé à celui de la première amorce de désossage 83. Une fois le couteau enfoncé transversalement, l'opérateur poursuit l'amorçage en raclant la partie osseuse, formant ainsi deux fentes, dont l'une 88, est vue sur le dessin supérieur du schéma E, l'autre étant sensiblement parallèle, ces fentes aboutissant à l'extrémité de la fente 87 réalisée dans la partie osseuse. Un léger coup de pointe de couteau permet de prolonger, vers la droite, les fentes jusqu'à l'amorce 83 de désossage initial, de sorte que l'on obtient une disposition générale représentée sur le dessin inférieur du schéma E avec le premier lambeau 85 qui se prolonge par une partie adhérant sur la structure osseuse, et le deuxième lambeau 89, opposé au premier et comprenant la partie cartilagineuse 90 séparée de la partie osseuse 82 par l'entaille 87.

En se référant au schéma F, on voit comment s'effectue le désossage du second lambeau, qui est pris dans la pince axialement mobile 46, 47 de la machine à désosser, tandis que l'extrémité 82 du côté sabot est maintenue dans la pince fixe 49, 50 de cette machine. Le mouvement de translation axial de la pince mobile provoque sans difficulté le désossage complet de la partie attenant à ce lambeau 89.

Le dessin inférieur du schéma F montre comment on enlève le premier lambeau 85, après avoir dégagé le pied de la pince fixe, l'avoir retourné pour venir serrer, à l'aide de la pince fixe, l'extrémité opposé au sabot, la pince mobile prenant alors en charge le lambeau 85 pour le désossage.

En se référant à la figure 17, on voit un dispositif permettant d'effectuer automatiquement les amorces de désossage.

Sur un bâti 91 sont fixés deux rails de guidage horizontaux 92a et 92b autorisant le glissement (flèche G) d'une plate-forme ou chariot 93, grâce à un vérin 94 dont le corps est solidaire du bâti 91 et la tige prend appui sur le chariot 93.

Sur le bâti 91, on notera la présence de deux flasques 95a et 95b, disposées de part et d'autres des deux rails 92a et 92b et destinées, la première à servir de support à une lame 96 actionnée transversalement auxdits rails au moyen d'un vérin 97 et la seconde à servir de logement à la pointe de la lame 96 lorsque celle-ci est actionnée par ce vérin. Bien évidemment, il pourra être prévu une glissière en aval du support 95a, afin de faciliter les mouvements de la lame 96.

Cette dernière a pour rôle de transpercer de part en part et sous la partie osseuse, une patte d'ongulé, maintenue sur le plan de la plate-forme 93 au moyen d'un organe de préhension tel qu'une mâchoire 98 articulée par un vérin vertical 99. La mâchoire 98 et le vérin 99 sont agencés sur le chariot 93.

Dans un premier temps, le vérin 99 est alimenté, actionnant la mâchoire 98 qui emprisonne la patte sur le chariot 93.

Dans un deuxième temps, le vérin 97 est alimenté, déplaçant la lame 96 qui traverse sous l'os la patte et qui vient s'engager dans le logement 95b.

Dans un troisième temps, le vérin 94 est alimenté, déplaçant le chariot 93 et la patte maintenue sur celui-ci, suivant le sens indiqué par la flèche G1. Sous l'effet de ce déplacement G1, la lame 96 incise la charnure de la patte jusqu'à son extrémité.

Dans un quatrième et dernier temps, les vérins 94, 97 et 99 ne sont pas alimentés, ramenant la mâchoire, la lame et le chariot à leur point de départ pour traiter une autre patte.

Bien que l'invention ait été décrite à propos d'un mode de mise en œuvre particulier, il est bien entendu qu'elle n'y est nullement limitée et qu'elle peut faire l'objet de différentes variantes.

Ainsi le désabotage initial peut être effectué par d'autres moyens que ceux décrits. Le tranchage des ergots peut également avoir lieu à n'importe quel moment avant le désossage. La première amorce de désossage peut être effectuée également à n'importe quel moment entre le lavage du pied et la deuxième amorce de désossage, ou même après celui-ci. De même, la réalisation de l'entaille du côté sabot peut être effectuée à tout moment avant le désossage.

Le procédé selon l'invention permet non seulement une mécanisation extrêmement poussée, mais aussi une augmentation très importante de la production.

Dans un autre mode de mise en œuvre, on peut effectuer, préalablement au désossage, un écorchage séparant la peau du reste de la charnure. Le reste de la charnure est alors soumis au désossage pendant que l'on échaude la peau qui est ensuite épilée.

Les opérations de lavage, échaudage, dépilage peuvent être entièrement automatisées ; les opérations de désabotage, tranchage des ergots, entaillage côté sabot et première amorce de désossage peuvent être réalisées par une machine combinée à cycle de fonctionnement automatique, seul le chargement et la commande du cycle restant manuels.

**Revendications**

1. Procédé de traitement de pieds de bovidés dans lequel on lave les pieds, on les échaude, on les désabote et on les dépile, caractérisé par le fait qu'après avoir désaboté les pieds et en avoir enlevé les ergots, on effectue leur désossage ou leur écorchage à la suite de quoi on échaude les charnures ou les peaux obtenues séparées des parties osseuses et on les dépile.

2. Procédé selon la revendication 1, caractérisé par le fait qu'après avoir effectué des entailles à l'une au moins des extrémités, on saisit, à proximité de l'extrémité correspondante, un lambeau et on le tire en direction de l'autre extrémité.

3. Procédé selon la revendication 2, caractérisé par le fait qu'on effectue une première entaille tangentiellement à l'os depuis l'extrémité supérieure du pied du côté antérieur, une entaille ostéo-chondrienne dans l'autre extrémité, séparant la partie osseuse de la partie cartilagineuse postéro-inférieure, et une autre entaille tangentielle à la partie osseuse et se raccordant, en ses extrémités, aux entailles précédentes, déterminant ainsi un premier lambeau antéro-supérieur et un second lambeau postéro-inférieur.

4. Procédé selon la revendication 3, caractérisé par le fait qu'on pratique l'entaille ostéo-chondrienne à l'aide d'une scie inclinée par rapport à la direction du pied d'un angle compris entre 8° et 14° et notamment de 11°.

5. Procédé selon l'une quelconque des revendications 1 à 4, caractérisé par le fait qu'on pratique des entailles pour le désossage après avoir désaboté le pied et enlevé les ergots.

6. Procédé selon l'une quelconque des revendications 1 à 5, caractérisé par le fait qu'on dépile les pieds à l'aide d'un organe racleur rotatif comportant des orifices bordés d'un tranchant.

7. Dispositif pour la mise en œuvre du procédé selon l'une quelconque des revendications 1 à 6, comprenant des postes de lavage (2), d'échaudage (13), de désabotage (5), de dépilage (14) et de désossage (12) ou écouchage, caractérisé par le fait que le poste de désossage (12) ou écorchage est disposé avant le poste d'échaudage (13).

8. Dispositif selon la revendication 7, caractérisé par le fait qu'il comprend, dans l'ordre, un poste de lavage (2), un poste de désabotage (5), un poste de cisaillage d'ergots (9), un poste d'entaillage (10), un poste de désossage (12), un poste d'échaudage (13) et un poste de dépilage (14).

9. Dispositif selon l'une des revendications 7 et 8, caractérisé par le fait que le poste de désabotage (5) comporte deux secteurs cannelés (21) parallèles oscillant en rotation en sens inverses, écartés l'un de l'autre, au-dessus d'une table horizontale.

10. Dispositif selon la revendication 9, caractérisé par le fait que les secteurs cannelés (21) sont excentrés de façon que l'intervalle qui les sépare soit minimum au moment de l'introduction du sabot et s'accroisse ensuite.

11. Dispositif selon l'une quelconque des revendications 7 à 10, caractérisé par le fait que le poste de cisaillage d'ergots (9) comporte un tranchant de cisaille fixe (24) et un tranchant de cisaille (28) porté par un bras mobile partiellement masqué par un plateau.

12. Dispositif selon l'une quelconque des revendications 7 à 11, caractérisé par le fait que le poste d'entaillage (10) comporte une scie circulaire (35) dont le plan est incliné, par rapport à l'axe de la patte, d'un angle compris entre 8° et 14° et notamment de 11°.

13. Dispositif selon l'une quelconque des revendications 7 à 12, caractérisé par le fait que le poste de désossage (12) comporte un organe fixe de préhension (49, 50), solidaire d'un bâti (40), et un organe mobile d'extraction (45) susceptible de s'écarter et de se rapprocher dudit organe fixe.

14. Dispositif selon la revendication 13, caractérisé par le fait que l'organe de préhension fixe comporte deux mâchoires (49, 50) dont l'une au moins est mobile dans un plan perpendiculaire à la direction du mouvement de l'organe mobile (45), lequel comporte également deux mâchoires (46, 47) dont l'une au moins est mobile (47) dans un plan parallèle à ladite direction.

15. Dispositif selon l'ensemble des revendications 9 à 11, caractérisé par le fait qu'il comporte un poste présentant un chariot (62) muni de moyens d'immobilisation de patte, déplaçable dans une direction, vers le poste de désabotage (5), pour lui présenter le sabot, et dans une autre direction, vers le poste d'entaillage (8), pour lui présenter l'extrémité désabotée.

16. Dispositif selon la revendication 15, caractérisé en ce que le chariot (62) présente un passage pour les ergots et des moyens de cisaillage d'ergots dans ce passage.

17. Dispositif selon l'une quelconque des revendications 7 à 16, caractérisé par le fait que le poste de dépilage (14) comporte une cuve (69) dans laquelle s'effectue l'échaudage.

18. Dispositif selon l'une quelconque des revendications 7 à 17, caractérisé par le fait que le poste de dépilage comporte, dans une cuve (69), un plateau rotatif horizontal (70) muni de perforations (74) dont les contours forment des arêtes vives (75) dirigées vers les charnures.

19. Dispositif selon la revendication 18, caractérisé par le fait que ledit plateau est surmonté d'un cylindre perforé fixe (72), déterminant avec la cuve (69) un espace annulaire périphérique (73).

20. Dispositif selon l'une quelconque des revendications 7 à 16, 18 et 19, caractérisé par le fait qu'il comporte un bras de transfert pivotant et coulissant verticalement, disposé entre une cuve d'échaudage et une cuve de dépilage.

21. Dispositif selon l'une quelconque des revendications 7 à 20, caractérisé par le fait qu'il comporte un poste d'amorçage avec un chariot (93) muni de moyens (98) d'immobilisation de patte, une lame (96) susceptible d'être actionnée dans une direction transversale par rapport à la patte et des moyens (94) pour déplacer le chariot et la patte dans une direction perpendiculaire à ladite lame.

## Claims

1. Method for treating bovine feet in which the feet are washed, scalded, dehoofed and depilated, characterized in that, after having dehoofed the feet and having removed the spurs therefrom, the boning operation or scraping operation is carried out, following which the flesh portion or the skins obtained separate from the bone portions are scalded and depilated.

2. Method according to claim 1, characterized in that after having made cuts in at least one of the ends, a flap is clamped, close to the corresponding end, and pulled in the direction of the other end.

3. Method according to claim 2, characterized in that a first cut is made tangentially to the bone from the upper end of the foot on the front side, an osteo-chondral cut in the other end, separating the bony portion from the postero-inferior cartilaginous portion, and another cut tangential to the bony portion and connecting, at its ends, the preceding cuts, thus defining a first antero-superior flap and a second postero-inferior flap.

4. Method according to claim 3, characterized in that the osteo-chondral cut is effected by means of a saw inclined with respect to the direction of the foot by an angle comprised between 8° and 14° and in particular of 11°.

5. Method according to any one of claims 1 to 4, characterized in that cuts are formed for boning after having dehoofed the foot and removed the spurs.

6. Method according to any one of claims 1 to 5, characterized in that the feet are depilated by means of a rotary scraper member including orifices bounded by a cutting edge.

7. Apparatus for performing the method according to any one of claims 1 to 6, comprising washing (2), scalding (13), dehoofing (5), depilating (14) and boning (12) or scraping stations, characterized in that the boning (12) or scraping station is located before the scalding station (13).

8. Apparatus according to claim 7, characterized in that it comprises in order, a washing station (2), a dehoofing station (5), a spur shearing station (9), a cutting station (10), a boning station (12), a scalding station (13) and a depilating station (14).

9. Apparatus according to any of claims 7 and 8, characterized in that the dehoofing station (5) includes two parallel grooved sectors (21) oscillating in rotation in reverse directions, separated from one another, above a horizontal table.

10. Apparatus according to claim 9, characterized in that the grooved sectors (21) are eccentric so that the space which separates them is a minimum at the moment of introducing the hoof and then increases.

11. Apparatus according to any one of claims 7 to 10, characterized in that the spur shearing station (9) includes a fixed shearing cutting edge (24) and a shearing cutting edge (28) borne by a movable arm partially masked by a plate.

12. Apparatus according to any one of claims 7 to 11, characterized in that the cutting station (10) includes a circular saw (35) whose plane is inclined, with respect to the axis of the foot, by an angle comprised between 8° and 14° and in particular of 11°.

13. Apparatus according to any one of claims 7 to 12 characterized in that the boning station (12) includes a fixed gripping member (49, 50), fast to a frame (40), and a movable extraction member (45) capable of being moved closer to and further from said fixed member.

14. Apparatus according to claim 13, characterized in that the fixed gripping member includes two jaws (49, 50) of which one at least is movable in a plane perpendicular to the direction of movement of the movable member (45), which also includes two jaws (46, 47) of which one at least is movable (47) in a plane parallel to said direction.

15. Apparatus according to any one of claims 9 to 11, characterized in that it comprises a station having a carriage (62) provised with foot immobilization means, displaceable in one direction, towards the dehoofing station (5), to present the hoof to it, and in another direction, towards the cutting station (8), to present the dehoofed end to it.

16. Apparatus according to claim 15, characterized in that the carriage (62) has a passage for the spurs and spur-shearing means in this passage.

17. Apparatus according to any one of claims 7 to 16, characterized in that the depilating station (14) includes a tank (69) in which the scalding is carried out.

18. Apparatus according to any one of claim 7 to 17, characterized in that the depilating station includes, in a tank (69), a horizontal rotary plate (70) provided with perforations (74) whose contours form sharp edges (75) directed towards the flesh portions.

19. Apparatus according to claim 18, characterized in that said plate is surmounted by a fixed perforated cylinder (72), defining with the tank (69) a peripheral annular space (73).

20. Apparatus according to any one of claims 7 to 16, 18 and 19, characterized in that it includes a pivoting and vertically sliding transfer arm, arranged between a scalding tank and a depilating tank.

21. Apparatus according to any one of claims 7 to 20, characterized in that it includes a starting station with a carriage (93) provided with foot immobilization means (98), a blade (96) actuatable in a direction transverse with respect to the foot and means (94) for moving the carriage and the foot in a direction perpendicular to said blade.

**Ansprüche**

1. Verfahren zum Behandeln von Rinderfüßen, bei welchem die Füße gewaschen, gebrüht, enthuft und enthaart werden, dadurch gekennzeichnet, daß nach Entfernung der Hufe und der Afterklauen die Füße entbeint bzw. abgehäutet werden und anschließend die Fleischfetzen oder die von den knöchernen Teilen getrennten Häute gebrüht und enthaart werden.

2. Verfahren gemäß Anspruch 1, dadurch gekennzeichnet, daß nach Durchführung von Einschnitten an mindestens einem der Enden, ein Hautlappen in der Nähe des entsprechenden Endes ergriffen und in Richtung des anderen Endes gezogen wird.

3. Verfahren gemäß Anspruch 2, dadurch gekennzeichnet, daß ein erster Einschnitt tangential zum Knochen, beginnend am oberen Fußende, auf der Vorderseite durchgeführt wird, dann ein Osteo-Chondro-Einschnitt an dem anderen Fußende, der den knöchernen Teil von dem knorpeligen Teil der unteren Hinterseite trennt, und dann ein weiterer Einschnitt, tangential zum knöchernen Teil, der an seinen Enden mit den vorangegangenen Einschnitten verbunden ist, so daß ein erster Hautlappen vorne oben und ein zweiter Hautlappen hinten unten entstehen.

4. Verfahren gemäß Anspruch 3, dadurch gekennzeichnet, daß der Osteo-Chondro-Einschnitt mit Hilfe einer in Bezug auf die Fußrichtung geneigten Säge mit einem Winkel zwischen 8° und 14°, insbesondere 11°, durchgeführt wird.

5. Verfahren gemäß einem der Ansprüche 1 bis 4, dadurch gekennzeichnet, daß die Einschnitte zum Entbeinen durchgeführt werden, nachdem der Huf und die Afterklauen vom Fuß entfernt worden sind.

6. Verfahren gemäß einem der Ansprüche 1 bis 5, dadurch gekennzeichnet, daß die Füße mit Hilfe eines drehbaren Abstreifelements, welches mit scharfkantigen Öffnungen versehen ist, enthaart werden.

7. Vorrichtung zur Ausführung des Verfahrens gemäß einem der Ansprüche 1 bis 6, welche aus Wasch-(2), Brüh-(13), Enthuf-(5), Enthaarungs-(14) und Entbeinungs-(12) bzw. Abhäutungsanlagen besteht, dadurch gekennzeichnet, daß die Entbeinungs-(12) bzw. Abhäutungsanlage vor der Brühanlage (13) angeordnet ist.

8. Vorrichtung gemäß Anspruch 7, dadurch gekennzeichnet, daß sie, der Reihe nach, aus einer Wasch-(2), Enthuf-(5), Afterklauenabschneide-(9), Einschneide-(10), Entbeinungs-(12), Brüh-(13) und Enthaarungsanlage (14) besteht.

9. Vorrichtung gemäß einem der Ansprüche 7 und 8, dadurch gekennzeichnet, daß die Enthufanlage (5) mit zwei parallelen geriffelten Walzen (21) versehen ist, die sich in entgegengesetzter Richtung pendelnd drehen und die oberhalb eines waagerechten Trägers voneinander getrennt angebracht sind.

10. Vorrichtung gemäß Anspruch 9, dadurch gekennzeichnet, daß die geriffelten Walzen (21) versetzt sind, so daß der dazwischenliegende Abstand bei der Einführung des Hufes zunächst minimal ist und sich dann vergrößert.

11. Vorrichtung gemäß einem der Ansprüche 7 bis 10, dadurch gekennzeichnet, daß die Afterklauenabschneideanlage (9) mit einer festen Schneide (24) und mit einer Schneide (28), die an einem beweglichen, teilweise von einer Platte verdeckten Arm befestigt ist, versehen ist.

12. Vorrichtung gemäß einem der Ansprüche 7 bis 11, dadurch gekennzeichnet, daß die Einschneideanlage (10) mit einer Kreissäge (35) versehen ist, deren Neigung in Bezug auf die Fußachse einen Winkel zwischen 8° und 14°, insbesondere 11°, aufweist.

13. Vorrichtung gemäß einem der Ansprüche 7 bis 12, dadurch gekennzeichnet, daß die Entbeinungsanlage (12) mit einem festen, von einem Gehäuse (40) umgebenen Greifelement (49-50) und mit einem beweglichen Greifelement (45), das sich in Bezug auf das feste Element entfernen oder nähern kann, versehen ist.

14. Vorrichtung gemäß Anspruch 13, dadurch gekennzeichnet, daß das feste Greifelement mit zwei Backen (49-50) versehen ist, wobei mindestens eine davon in einer zur Bewegungsrichtung des mobilen Elements (45) senkrechten Ebene beweglich ist, welches ebenfalls aus zwei Backen (46-47) besteht, wobei mindestens eine (47) davon in einer zur besagten Richtung parallelen Ebene beweglich ist.

15. Vorrichtung gemäß allen Ansprüchen 9 bis 11, dadurch gekennzeichnet, daß sie aus einer Anlage mit einem Schlitten (62) besteht, welcher mit Mitteln zur Befestigung des Fußes ausgestattet ist und in Richtung zur Enthufanlage (25) hin, um den Huf darzureichen, und in eine andere Richtung zur Einschneideanlage (8) hin, um das enthufte Ende darzureichen, verschiebbar ist.

16. Vorrichtung gemäß Anspruch 15, dadurch gekennzeichnet, daß der Schlitten (62) mit einer Öffnung für die Afterklauen und mit Mitteln zum Abschneiden der Afterklauen in dieser Öffnung versehen ist.

17. Vorrichtung gemäß einem der Ansprüche 7 bis 16, dadurch gekennzeichnet, daß die Enthaarungsanlage (14) mit einem Kessel (69) versehen ist, in welchem das Brühen durchgeführt wird.

18. Vorrichtung gemäß einem der Ansprüche 7 bis 17, dadurch gekennzeichnet, daß die Enthaarungsanlage mit einer in einem Kessel (69) waagerechten drehbaren Scheibe (70) ausgestattet ist, welche mit Perforierungen (74) mit scharfkantigen Rändern, die zum Kesselinneren hin gerichtet sind, versehen ist.

19. Vorrichtung gemäß Anspruch 18, dadurch gekennzeichnet, daß die besagte Scheibe von einem festen, perforierten Zylinder (72) überragt wird, der mit dem Kessel (69) einen äußeren ringförmigen Raum (73) bildet.

20. Vorrichtung gemäß einem der Ansprüche 7 bis 16, 18 und 19, dadurch gekennzeichnet, daß sie mit einem schwenkbaren und senkrecht gleitenden Abnehmerarm versehen ist, der zwischen einem Brühkessel und einem Enthaarungskessel steht.

21. Vorrichtung gemäß einem der Ansprüche 7 bis 20, dadurch gekennzeichnet, daß sie aus einer Einleitungsvorrichtung mit einem Schlitten (93) besteht, welcher mit Mitteln (98) zur Befestigung des Fußes, mit einer Klinge (96), die quer zum Fuß angesetzt werden kann, und mit Mitteln (94), um den Schlitten mit dem Fuß in eine zur Klinge senkrechten Richtung zu verschieben, versehen ist.

Fig.1

Fig.2

Fig.3

17

18

19

16

12

13

14

15

Fig.4

21  22

21

20

Fig.5

21a

22

21

21

21a

2

*Fig. 6*

26   25

23

*Fig. 7*

24   26

28

27

29   23

*Fig. 8*

39  37   35   38

33

34

36

Fig:9

Fig:10

Fig:11

*Fig:13*

58    L    52    55    54    53    59a

28a    59b

*Fig:12*

66   21   66   67   68   35   36   56a   56b   65   59a   63b   64

$R_1$   $R_2$

21   60b   63a   57a   C   57b   62   59b   61   F   60a

0 012 088

Fig.17

Fig.14

Fig.15

6

Fig.16